(19) **Europäisches Patentamt**

**European Patent Office**

**Office européen des brevets**

(11) Veröffentlichungsnummer: **0 316 896 B1**

(12) **EUROPÄISCHE PATENTSCHRIFT**

(45) Veröffentlichungstag der Patentschrift: **04.03.92**

(51) Int. Cl.⁵: **A01D 78/10**

(21) Anmeldenummer: **88119096.1**

(22) Anmeldetag: **17.11.88**

(54) **Heuwerbungsmaschine.**

(30) Priorität: **20.11.87 DE 8715405 U**

(43) Veröffentlichungstag der Anmeldung:
**24.05.89 Patentblatt 89/21**

(45) Bekanntmachung des Hinweises auf die
Patenterteilung:
**04.03.92 Patentblatt 92/10**

(84) Benannte Vertragsstaaten:
**DE ES FR GB NL**

(56) Entgegenhaltungen:
**DE-U- 8 706 316**
**FR-A- 2 376 606**
**FR-A- 2 401 597**
**US-A- 1 913 034**
**US-A- 3 165 162**

(73) Patentinhaber: **H. Niemeyer Söhne GmbH &
Co. KG**
**Heinrich-Niemeyer-Strasse 52**
**W-4446 Hörstel-Riesenbeck(DE)**

(72) Erfinder: **Ungruh, Josef**
**Birkhahnweg 7**
**W-4440 Rheine(DE)**
Erfinder: **Rohlmann, Maximilian**
**Rosenstrasse 8**
**W-4446 Hörstel-Riesenbeck(DE)**

(74) Vertreter: **Busse & Busse Patentanwälte**
**Postfach 1226 Grosshandelsring 6**
**W-4500 Osnabrück(DE)**

## Beschreibung

Die Erfindung bezieht sich auf eine Heuwerbungsmaschine gemäß dem Oberbegriff des Anspruchs 1.

Bei einer bekannten Maschine dieser Art (DE-GM 87 06 316) weist die Zugdeichsel ein Anschlußmaul für eine Ankupplung der Maschine an die Ackerschiene eines landwirtschaftlichen Zugfahrzeugs auf. Die Heuwerbungsmaschine läuft dementsprechend wie ein übliches Anhängegerät dem Zugfahrzeug nach.

Dies gilt auch für eine weiterhin bekannte Heuwerbungsmaschine (DE-GM 73 18 934), bei der das Vorderende der Zugdeichsel der sich lediglich über die Stützräder der Kreiselrechen auf dem Boden abstützenden Maschine mit einem an die Hubarme der Dreipunkthydraulik des Zugfahrzeugs anschließbaren Anbaubock gelenkig verbunden ist und bei der in der Arbeitsstellung der Maschine diese um die Verbindungshochachse zwischen Zugdeichsel und Anbauteil begrenzt frei schwenkbar ist.

Auch eine weitere bekannte Heuwerbungsmaschine der eingangs genannten Art, bei der die Zugdeichsel an ihrem vorderen Ende um eine Verbindungshochachse begrenzt schwenkbar mit einem Anbauteil verbunden ist, das lediglich mit den Unterlenkern der Dreipunkthydraulik des Zugfahrzeugs kuppelbar ist, bildet lediglich ein nachlaufendes Anhängegerät, das

Ein Ausführungsbeispiel des Gegenstands der Erfindung ist in der Zeichnung näher veranschaulicht. In der Zeichnung zeigen:

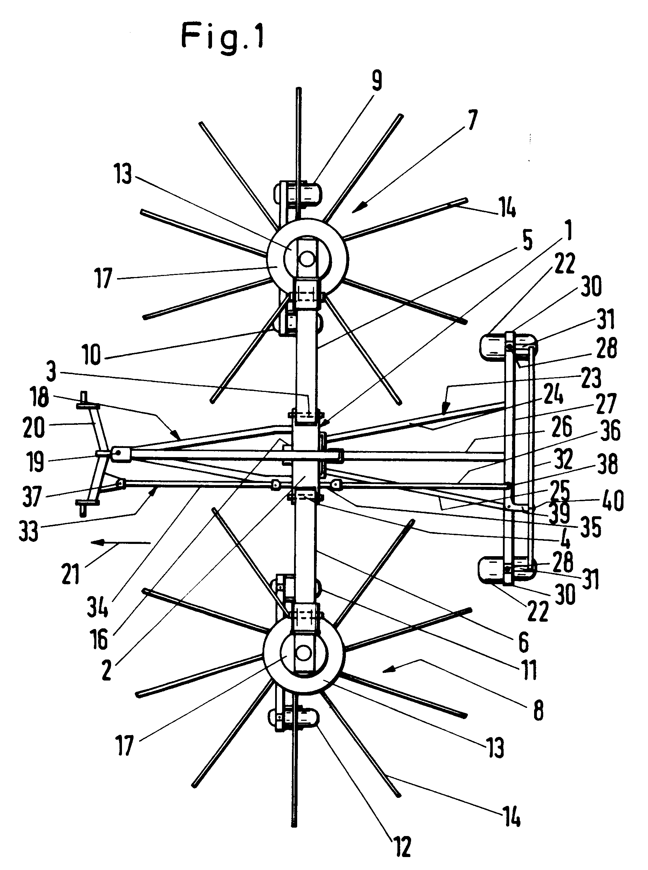

Fig. 1 eine Draufsicht auf eine in Arbeitsstellung befindliche Heuwerbungsmaschine zur Veranschaulichung der Teile für Geradeausfahrt,

Fig. 2 eine Darstellung ähnlich Fig. 1 zur Veranschaulichung der Teile der Heuwerbungsmaschine bei Kurvenfahrt, und

Fig. 3 eine schematische Seitenansicht zu Fig. 1.

Die in der Zeichnung veranschaulichte Heuwerbungsmaschine umfaßt im einzelnen einen Maschinenquerträger 1, der einen Mitteilteil 2 und zwei jeweils um eine fahrtrichtungsparallele Klappachse 3,4 hochklappbare Außenteile 5,6 aufhinsichtlich seiner Manövrierfähigkeit wie alle Nachläufer beschränkt ist.

Der Erfindung liegt die Aufgabe zugrunde, eine Heuwerbungsmaschine der eingangs genannten Art zu schaffen, die besser manövrierfähig ist und insbesondere mit kleineren Vorgewenden auskommt. Die Erfindung löst diese Aufgabe mit den Merkmalen des Anspruchs 1. Hinsichtlich wesentlicher weiterer Ausgestaltungen wird auf die Ansprüche 2 bis 7 verwiesen.

Durch die Ausgestaltung der Laufräder als Lenkräder wird eine wesentlich verbesserte Manövrierfähigkeit sowohl in Arbeitsstellung der Heuwerbungsmaschine, in der sich die Kreiselrechen über ihre Stützräder auf dem Boden abstützen, als auch in der Transportstellung der Heuwerbungsmaschine erreicht, in der die Außenteile des Maschinenquerträgers mitsamt den an ihnen befestigten Kreiselrechen hochgeklappt sind, um die Maschinenbreite auf das für Straßentransporte erforderliche Maß zu verringern. Infolge der besseren Manövrierfähigkeit werden auch nur wesentlich kleinere Vorgewende benötigt.

Grundsätzlich sind lenkbare Stützräder in der Landtechnik bekannt, jedoch bei anderen landwirtschaftlichen Geräten und zu anderen Zwecken. So ist beispielsweise ein Pflug bekannt (FR-A-2 376 606), dessen Pflugrahmen über Stützräder auf dem Boden abgestützt ist, die um Hochachsen schwenkbar und in ihren Schwenkbewegungen durch eine Spurstange synchronisiert sind. Dies ermöglicht es, dem Pflugrahmen eine Schräglage zur Fahrtrichtung zur einen oder zur anderen Schlepperseite hin in Abhängigkeit von der jeweils im Einsatz befindlichen Gruppe von Scharen zu vermitteln. Zur Vorgabe der Lage des Pflugrahmens relativ zum Schlepper ist ein Hydrauliksystem vorgesehen, das im Zusammenhang mit einem Drehen des Pflugrahmens den Stützrädern eine Verschwenkung erteilt, durch die der Pflugrahmen in seine für den jeweiligen Pflugbetrieb gewünschte Schräglage überführt wird, in der die Stützräder eine fahrtrichtungsparallel Ausrichtung einnehmen. Ergibt sich während des Pflugbetriebes eine Veränderung der Schräglage des Pflugrahmens zur Fahrtrichtung, so ist das Hydrauliksystem mit seinen verschiedenen Hydraulikzylindern bestrebt, durch gleichsinniges Verschwenken der Stützräder die gewünschte vorbestimmte Schräglage des Pflugrahmens wieder herbeizuführen. Die Stützräder erfahren dabei zwar eine Schwenkbewegung um Hochachsen in Abhängigkeit von einer Lageveränderung des Pflugrahmens zum Schlepper, jedoch hat das Hydrauliksystem im Pflugbetrieb lediglich die Funktion einer die Pfluglage stabilisierenden Regelung.

Auch bei einem weiterhin bekannten Pflug (FR-A-2 401 597) dient die Verschwenkbarkeit eines am rückwärtigen Ende des Pflugrahmens um eine Hochachse schwenkbar abgestützten Stützrades dazu, die gewünschte vorgegebene Ausrichtung des Pflugrahmens zum Schlepper im Sinne einer Betriebslageregelung wiederherzustellen.

Bei einem bekannten Mähdrescher (US-A-1 914 034) mit einem über Laufräder und Senkräder auf dem Boden abgestützten Hauptteil und einem Arbeitsteil, der aus einer zum Hauptteil parallelen, die Maschinenbreite verringernden Transportstellung in eine rechtwinklig ausgelegte Betriebsstellung verschwenkbar ist, ist ein Stützrad vorgesehen, das am Arbeitsteil um eine Hochachse verschwenkbar angebracht ist. Dieses Stützrad ist im Betrieb des Mähdreschers mit in Seitenauslage befindlichem Arbeitsteil mittels einer Arretierungsstrebe gegen Schwenkbewegungen arretiert. In Transportstellung des Arbeitsteils ist eine Zug- und Schubstange vorgesehen, die in Abhängigkeit von Verschwenkbewegungen der Maschinendeichsel relativ zum Hauptteil des Mähdreschers dem Stützrad eine Lenkbewegung erteilen soll, um kurze Wendungen beim Transport des Mähdreschers zu ermöglichen. Bei einer Ausbildung mit einer von der Deichsel betätigten Senkachse vor den Laufrädern des seinerseits einem Zugfahrzeug nachlaufenden Hauptteils wird allerdings die Manövrierfähigkeit des Mähdreschers auf Transportfahrten allein durch den Ausschlag der Lenkräder und deren Zuordnung zu den Laufrädern bestimmt, während das Verschwenken des Stützrades lediglich sicherstellen kann, daß dieses in Kurvenfahrten über den Boden rollt und nicht über diesen hinwegradiert.

weist. An den Außenteilen 5,6 des Maschinenquerträgers 1 ist jeweils ein Kreiselrechen 7,8 angebracht, der sich über zwei Stützräder 9,10 bzw. 11,12 auf dem Boden abstützt.

Die Kreiselrechen 7,8 bestehen jeweils aus einem zentralen Drehkörper 13 und mit diesem verbundenen, etwa sternförmig ausgerichteten Zinkenarmen 14, die an ihren Außenenden mit Rechzinken 14′ besetzt sind und neben ihrer Umlaufbewegung um die Kreiselhochachse eine Schwenkbewegung um ihre Mittelachse ausführen, die durch ein Steuergetriebe vorgegeben wird. Der Antrieb der Kreiselrechen 7,8 erfolgt vom Zugfahrzeug her über eine Zapfwelle, die an die Eingangswelle 15 eines Zentralgetriebes 16 angeschlossen wird. Im Maschinenquerträger 1 angeordnete, nicht näher veranschaulichte Antriebswellen führen zu Winkelgetrieben 17, deren Abtriebswellen dann jeweils einen Kreiselrechen 7,8 antreiben.

Der Mittelteil 2 des Maschinenquerträgers 1 ist mit einer starren, an das landwirtschaftliche Zugfahrzeug anschließbaren Zugdeichsel 18 verbunden, die bei dem dargestellten Beispiel an ihrem Vorderende um eine Verbindungshochachse 19 begrenzt schwenkbar mit einem Anbauteil 20 verbunden ist, das als Zweipunkttragwerk mit den beiden Unterlenkern der Dreipunkthydraulik des Zugfahrzeugs kuppelbar ist.

Auf seiner der Fahrtrichtung 21 abgewandten Rückseite stützt sich der Mittelteil 2 des Maschinenquerträgers 1 über zwei einachsig im Abstand hinter dem Mittelteil 2 angeordnete Laufräder 22 auf dem Boden ab, die an einem sich vom Mittelteil 2 rückwärts erstreckenden Fahrgestell 23 angebracht sind. Dieses Fahrgestell 23 umfaßt eine Gruppe von Längsstreben 24,25,26, die am Mittelteil 2 angreifen und rückseitig mit einer Querstrebe 27 verbunden sind, die an ihren Enden Hochachsen 28 definierende Lager 29 für Achszapfen von Laufradträgern 30 trägt. Diese in der Zeichnung nicht sichtbaren Achszapfen sind an ihren oberen Enden mit Lenkhebeln 31 verbunden, die an ihren freien Enden durch eine Spurstange 32 verbunden sind, welche die Parallelführung der Laufräder 22 gewährleistet und deren Ausrichtungsänderungen synchronisiert.

Die Spurstange 32 ist Teil einer Lenkvorrichtung 33, mittels der die Laufräder 22 in Abhängigkeit von Ausrichtungsänderungen zwischen der Zugdeichsel 18 und dem mit der Heuwerbungsmaschine verbundenen Zugfahrzeug lenkbar sind. Bei dem dargestellten Ausführungsbeispiel umfaßt die Lenkvorrichtung 33 eine Zug- und Schubstange 34,35,36 als Betätigungsglied, deren vorderes Ende in seitlichem Abstand zum Vorderende der Zugdeichsel 18 am Anbauteil bei 37 gelenkig angreift.

Das rückwärtige Ende der Zug- und Schubstange 34,35,36 greift bei 38 an dem einen Schenkel eines an der Querstrebe 27 des Fahrgestell 23 schwenkbar gelagerten Winkelhebels 39 an, dessen bei 40 gelenkig mit der Spurstange 32 verbundener Schenkel eine den Lenkhebeln 31 der Radträger entsprechende wirksame Länge und Ausrichtung hat.

Angesichts der erheblichen Länge der Zug- und Schubstange 34,35,36 ist diese am Mittelteil 2 des Maschinenquerträgers 1 abgestützt. Bevorzugt ist dabei die Zug- und Schubstange 34,35 mit einem gesonderten, am Mittelteil 2 des Maschinenquerträgers 1 geführten Zwischenteil 35 versehen und umfaßt einen Vorderteil 34 und einen Hinterteil 36, die jeweils mit den Enden des Zwischenteils 35 gelenkig verbunden sind. Die Unterteilung und gelenkige Verbindung der Teile der Zug- und Schubstange 34,35,36 erlaubt eine Anpassung beispielsweise bei Höhenverstellungen des Maschinenquerträgers 1 zu den Laufrädern 22.

Der Zwischenteil 35 kann am Mittelteil 2 des Maschinenquerträgers 1 in einer Längsführung verschieblich geführt sein, kann jedoch auch einen Doppelhebel bilden, der um eine Schwenkachse am Mittelteil 2 schwenkbar geführt ist.

Die dargestellte mechanische Ausgestaltung der Lenkvorrichtung 33 ist besonders einfach und robust und von hinreichender Präzision. Sie kann nicht nur Einsatz finden bei Vorhandensein des dargestellten Anbauteils 20, sondern auch dann zur Anwendung kommen, wenn beispielsweise das Vorderende der Zugdeichsel 18 mit einem Kupplungsmaul versehen ist und mit der Ackerschiene des Zugfahrzeugs gekuppelt wird. In diesem Falle kann das vordere Ende der Zug- und Schubstange 34,35,36 in seitlichem Abstand zum Kupplungspunkt der Zugdeichsel 18 ebenfalls mit der Ackerschiene des Zugfahrzeugs gelenkig verbunden werden.

Anstelle einer mechanischen Ausführung ist jedoch auch eine Lenkvorrichtung hydraulischer Ausbildung einsetzbar, die einen hydraulischen Geber umfaßt, der über Verbindungsleitungen mit einem hydraulischen, an der Spurstange 32 angreifenden Stellantrieb verbunden ist. Auch eine solche Ausführung, bei der der Geber in Gestalt eines Hydraulikzylinders z. B. einerseits am Anbauteil 20, andererseits am vorderen Bereich der Zugdeichsel angelenkt sein kann, schafft ebenfalls eine Lenkbetätigung für die Laufräder 22 in Abhängigkeit von Ausrichtungsänderungen zwischen der Zugdeichsel 18 und dem Zugfahrzeug.

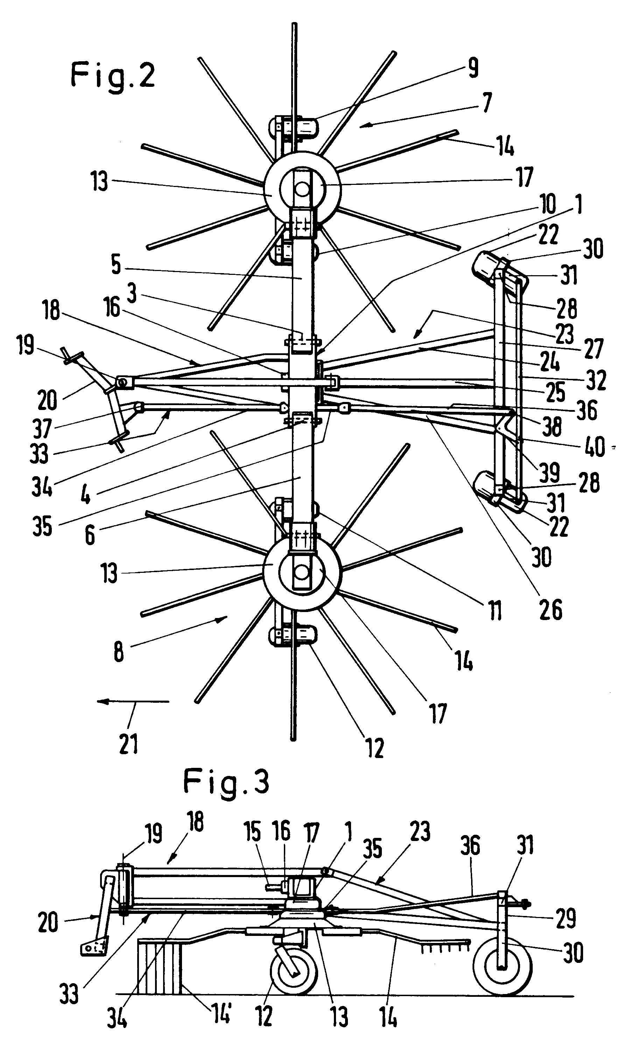

Bei der dargestellten mechanischen Ausführung bildet das Anbauteil 20 das mit dem Zugfahrzeug ausrichtungsfest verbundene Bauteil, das um die Verbindungshochachse 19 schwenkt, sobald der Schlepperfahrer einen Bogen fährt. Diese Schwenkbewegung überträgt die Lenkvorrichtung 33 auf die Laufräder 22 in Gestalt eines Lenkausschlages, wie er das Fig. 2 dargestellt ist.

## Patentansprüche

1. Heuwerbungsmaschine mit zwei quer zur Fahrtrichtung (21) der Maschine nebeneinander angeordneten, sich über Stützräder (9,10;11,12) auf dem Boden abstützenden Kreiselrechen (7,8), einen an seinen Enden mit den Kreiselrechen (7,8) verbundenen Maschinenquerträger (1), der einen mit einer starren, an ein landwirtschaftliches Zugfahrzeug anschließbare Zugdeichsel (18) verbundenen Mittelteil (2) und zwei jeweils um eine fahrtrichtungsparallele Klappachse (3,4) hochklappbare Außenteile (5,6) aufweist, an denen die Kreiselrechen (7,8) angeordnet sind, und über zwei im Abstand hinter dem Mittelteil, parallel und nebeneinander angeordnete Laufräder (22) auf dem Boden abgestützt ist, die an einem sich vom Mittelteil (2) rückwärts erstreckenden Fahrgestell (23) angebracht sind, dadurch gekennzeichnet, daß

- jedes Laufrad (22) mittels seines Laufradträgers (30) am Fahrgestell (23) um eine vom Achszapfen des Laufradträgers (30) definierte Hochachse (28) schwenkbar abgestützt ist und beide Laufräder (22) gemeinsam mittels einer Lenkvorrichtung (33) ausschließlich in Abhängigkeit von Ausrichtungsänderungen zwischen Zugdeichsel (18) und Zugfahrzeug lenkbar sind,

- die Lenkvorrichtung (33) eine Zug- und Schubstange (34,35,36) als Betätigungsglied umfaßt, deren vorderes Ende in seitlichem Abstand zum Vorderende der Zugdeichsel (18) an einem mit den Unterlenkern der Dreipunkthydraulik des Zugfahrzeugs verbindbaren Anbauteil (20) angelenkt ist, mit dem das Vorderende der Zugdeichsel (18) um eine Verbindungshochachse (19) schwenkbar verbunden ist, und

- die Zug- und Schubstange (34,35,36) bei Verschwenken des Anbauteils (20) relativ zur Zugdeichsel (18) den durch eine Spurstange (32) in ihren Lenkbewegungen synchronisierten Laufradträgern (30) eine Verschwenkung in einer Richtung erteilt, die - in Draufsicht auf die Maschine - zu der des Anbauteils (20) entgegengerichtet ist.

2. Heuwerbungsmaschine nach Anspruch 1, dadurch gekennzeichnet, daß die Zug- und Schubstange (34,35,36) an einem Schenkel eines am Fahrgestell (23) gelagerten Winkelhebels (39) angreift, dessen mit der Spurstange (32) verbundener Schenkel eine Länge und Ausrichtung hat, die der Länge und Ausrichtung von Lenkhebeln (31) an den Laufradträgern (30) entspricht.

3. Heuwerbungsmaschine nach Anspruch 1 oder 2, dadurch gekennzeichnet, daß die Zug- und Schubstange (34,35,36) am Mittelteil (2) des Maschinenquerträgers (1) abgestützt ist.

4. Heuwerbungsmaschine nach Anspruch 3, dadurch gekennzeichnet, daß die Zug- und Schubstange (34,35,36) einen gesonderten, am Mittelteil (2) des Maschinenquerträgers (1) geführten Zwischenteil (35) und einen mit dessen Enden jeweils gelenkig verbundenen Vorder- und Hinterteil (34,36) aufweist.

5. Heuwerbungsmaschine nach Anspruch 4, dadurch gekennzeichnet, daß der Zwischenteil (35) am Mittelteil (2) des Maschinenquerträgers (1) längsverschieblich geführt ist.

6. Heuwerbungsmaschine nach Anspruch 4, dadurch gekennzeichnet, daß der Zwischenteil als am Mittelteil (2) des Maschinenquerträgers (1) schwenkbar geführter Doppelhebel ausgebildet ist.

7. Heuwerbungsmaschine nach Anspruch 1, dadurch gekennzeichnet, daß die Lenkvorrichtung (33) einen hydraulischen, am Anbauteil (20) angreifenden Geber und einen mit diesem über Verbindungsleitungen verbundenen, hydraulischen, an der Spurstange (32) angreifenden Stellantrieb umfaßt.

## Claims

1. A hay-making machine with, disposed beside one another transversely in relation to the direction of travel (21) of the machine, and supported through supporting wheels (9, 10; 11, 12) on the ground, two rotary rakes (7, 8), a transverse member (1) the ends of which are connected to the rotary rake (7, 8) and which has, connected to a draw bar (18) which can be connected to an agricultural tractor vehicle, a rigid middle part (2) and two outer parts (5, 6) which are adapted to be raised about an axis (3, 4) which is parallel with the direction of travel and on which the rotary rakes (7, 8) are disposed, and supported on the ground by two spaced apart parallel and adjacently disposed wheels (22) which are at a distance behind the middle part and which are mounted on a chassis (23) extending rearwardly from the middle part (2), characterised in that

   - each wheel (22) is by means of its wheel carrier (30) supported on the chassis (23) so that it is pivotable about a high axis (28) defined by the axle journal of the wheel carrier (30) and in that both wheels (22) can be jointly steered by means of a steering means (33) solely as a function of variations in the alignment between the draw bar (18) and the tractor vehicle,
   - and in that the steering device (33) comprises a push and pull rod (34, 35, 36) which acts as an actuating member, the front end of which is at a lateral distance from the front end of the draw bar (18), being articulated on an attachment part (20) which can be connected to the bottom links of the three-point hydraulic system of the tractor vehicle, to which the leading end of the draw bar (18) is connected so that it can pivot about a high connecting axis (19) and in that
   - the traction and push rods (33, 34, 35), upon a pivoting of the attachment part (20) in relation to the draw bar (18) imparts in one direction a pivoting movement to the wheel carriers (30) which are synchronised by a track rod (32) in their steering movements and which - in the plan view of the machine - are opposite the attachment part (20).

2. A hay-making machine according to Claim 1, characterised in that the push and pull rod (34, 35, 36) engages an arm of an angle lever (39) mounted on the chassis (23) and of which the arm which can be connected to the track rod (32) has a length and orientation which correspond to the length and orientation of steering levers (31) on the wheel carriers (30).

3. A hay-making machine according to Claim 1 or 2, characterised in that the push and pull rods (34, 35, 36) are braced on the middle part (2) of the machine transverse member (1).

4. A hay-making machine according to Claim 3, characterised in that the push and pull member (34, 35, 36) has, guided on the middle part (2) of the transverse machine member (1) a separate intermediate part (35) and a front and rear part (34, 36) which is articulatingly connected to the ends thereof.

5. A hay-making machine according to Claim 4, characterised in that the intermediate part (35) is longitudinally displaceably guided on the middle part (2) of the transverse machine member (1).

6. A hay-making machine according to Claim 4, characterised in that the intermediate part is constructed as a double lever which is pivotally guided on the middle part (2) of the transverse machine carrier (1).

7. A hay-making machine according to Claim 1, characterised in that the steering device (33) comprises, engaging the attachment part (20), a hydraulic transmitter and, connected therewith via connecting lines, a hydraulic positioning drive which engages the track rod (32).

## Revendications

1. Machine pour récolter du foin comportant deux râteaux rotatifs (7,8) juxtaposés transversalement par rapport à la direction de déplacement (21) de la machine et s'appuyant sur le sol par l'intermédiaire de deux roues d'appui (9,10;11,12), une poutre transversale (1) dont les extrémités sont reliées aux râteaux rotatifs (7,8), poutre qui se compose d'une partie centrale (2) rigide, reliée à un timon (18) susceptible d'être accouplé à un tracteur agricole, et deux parties extérieures (5,6) qui portent les râteaux rotatifs (7,8) et qui peuvent être relevées respectivement autour d'axes de relevage (3,4) parallèles à la direction de déplacement, et qui s'appuient sur le sol par deux roues de roulement (22) à une certaine distance derrière la partie centrale (2), roues portées par un châssis de roulement (23) qui s'étend vers l'arrière à partir de la partie centrale (2), machine caractérisée en ce que

- chaque roue de roulement (22) est reliées au moyen de son support (30) de manière pivotante au châssis (23) autour d'axes (28) definis par les supports (30) et dirigés vers le haut, et les deux roues de roulement (22) sont dirigeable par un dispositif de direction (33) commandé seulement en fonction du changement d'alignement entre le timon (18) et le tracteur,
- le dispositif de direction (33) comprend une tige de poussée et de traction (34,35,36) comme organe de manoeuvre, dont l'extremité avant est reliée de manière articulée et en etant écartée lateralement de l'extremité avant du timon (18) à une pièce d'attelage (20) susceptible d'etre reliée aux bras inferieurs du tracteur, l'extremité du timon (18) etant reliée à cette pièce de manière basculante autour d'un axe de liaison (19) dirigé vers le haut, et
- le tige de poussée et de traction (34,35,36) en cas de pivotement de la pièce d'attelage (20) relatif au timon (18) fait pivoter les supports (30), leur mouvement de direction etant synchronisès par une barre d'accouplement (32), dans une direction qui est - en vue de plan sur la machine - orientée en sens contraire à cette de la pèce d'attelage (20).

2. Machine à récolter le foin selon la revendication 1, caractérisée en ce que la tige de compression ou de traction (34,35,36) agit sur une branche d'un levier coudé (39) porté par le châssis de roulement (23), levier dont la branche reliée à la barre d'accouplement (32) présente une longueur et un alignement correspondant au bras de levier (31) des supports de roue (30).

3. Machine à récolter le foin selon l'une des revendications 1 ou 2, caractérisée en ce que la tige de poussée et de traction (34,35,36) s'appuie sur la partie centrale (2) de la poutre transversale (1) de la machine.

4. Machine à récolter le foin selon la revendication 3, caractérisée en ce que la tige de poussée et de traction (34,35,36) comporte une partie intermédiaire (35) distincte, guidée sur la partie centrale (2) de la poutre transversale (1) de la machine et une partie avant et une partie arrière (35,36) respectives, reliées à cette partie intermédiaire de manière articulée par leur extrémité.

5. Machine à récolter le foin selon la revendication 4, caractérisée en ce que la partie intermédiaire (35) est guidée de manière à coulisser longitudinalement sur la partie centrale (2) de la poutre transversale de la machine.

6. Machine à récolter le foin selon la revendication 4, caractérisée en ce que la partie intermédiaire est réalisée sous la forme d'un double levier guidé de manière basculante sur la partie centrale (2) de la poutre transversale (1) de la machine.

7. Machine à récolter le foin selon la revendication 1, caractérisée en ce que le dispositif de direction (33) agissant sur la pièce d'attelage (20) comprend un capteur hydraulique relié par des conduites de liaison à un moyen de réglage hydraulique agissant sur la barre d'accouplement (32).

# Fig.1

Fig.2

Fig.3